# EUROPEAN PATENT APPLICATION

(11) **EP 4 831 797 A1**
(43) Date of publication of application: **28.10.2026**
(21) Application number: 24906348.8
(22) Date of filing: 17.12.2024
(51) Int. Cl.: G06F 8/71

(54) **MATCHING INFORMATION GENERATION METHOD, SOFTWARE PACKAGE MATCHING RELATIONSHIP DETERMINATION METHOD, AND DEVICE**

(30) Priority: 21.12.2023 CN 202311767027
(71) Applicant: Yinwang Intelligent Technologies Co., Ltd., Shenzhen, Guangdong 518110 (CN)
(72) Inventor: HU, Yong, Shenzhen, Guangdong 518129 (CN); QIAN, Lu, Shenzhen, Guangdong 518129 (CN)
(74) Representative: Pfenning, Meinig & Partner mbB
(86) International application number: PCT/CN2024/139957
(87) International publication number: WO 2025/130868

(57) **Abstract**

This application provides a method for generating matching information, a method for determining a software package matching relationship, and an apparatus. The method for generating matching information includes: obtaining version information of an interface set of a first software package, and obtaining version information of an interface set of a second software package, where there is an interaction relationship between the interface set of the first software package and the interface set of the second software package; and generating product matching information of the first software package based on the version information of the interface set of the first software package and the version information of the interface set of the second software package, where the product matching information indicates a matching relationship between the interface set of the first software package and the interface set of the second software package. In this manner, the product matching information of the first software package can be automatically generated, which reduces labor costs and improves efficiency.

## Description

This application claims priority to Chinese Patent Application No. 202311767027.9, filed with the China National Intellectual Property Administration on December 21, 2023 and entitled "METHOD FOR GENERATING MATCHING INFORMATION, METHOD FOR DETERMINING SOFTWARE PACKAGE MATCHING RELATIONSHIP, AND APPARATUS", which is incorporated herein by reference in its entirety.

### TECHNICAL FIELD

This application relates to the field of data processing technologies, and in particular, to a method for generating matching information, a method for determining a software package matching relationship, and a data processing apparatus.

### BACKGROUND

A product may have a plurality of software packages, and the plurality of software packages are usually released at different cadences. In addition, a function of interacting with another software package may be added to a new version of the software package. How to determine a matching relationship between the software packages is a very complex issue for software package version management.

Currently, for version matching management between different software packages, a manner of manually performing verification and confirmation based on an overall software package is usually used, and a compatibility test is performed on each software package, to determine whether the software packages match each other, and then output a version matching table of the software packages.

However, the manner of manually confirming the matching relationship between the software packages has disadvantages of heavy workload, low efficiency, and difficult management.

### SUMMARY

This application discloses a method for generating matching information, a method for determining a software package matching relationship, and a data processing apparatus, which can automatically perform a version matching check on a software package, achieving high efficiency.

According to a first aspect, this application provides a method for generating matching information. It may be understood that the method for generating matching information may be performed by a data processing apparatus. The data processing apparatus may be an electronic device, or may be a processor, a chip (system), or a circuit used in an electronic device. This is not limited in this application. The method for generating matching information includes:
obtaining version information of an interface set of a first software package, and obtaining version information of an interface set of a second software package, where there is an interaction relationship between the interface set of the first software package and the interface set of the second software package; and generating product matching information of the first software package based on the version information of the interface set of the first software package and the version information of the interface set of the second software package, where the product matching information indicates a matching relationship between the interface set of the first software package and the interface set of the second software package.

In this application, the version information of the interface set of the first software package and the version information of the interface set of the second software package are obtained, and the product matching information of the first software package is generated based on the version information of the interface set of the first software package and the version information of the interface set of the second software package. In this manner, the product matching information of the first software package can be automatically generated, which reduces labor costs and improves efficiency.

An interface of a software package is a connection or interaction interface between software programs, which allows different programs to exchange information with each other without processing internal details of the programs. The interface of the software package may also be a bridge connecting a developer and a user. The user may use a software service through the interface, and the interface may also be used to connect different software. An interface set of the software package may include one or more interfaces.

That there is the interaction relationship between the interface set of the first software package and the interface set of the second software package may be understood that the interface set of the first software package and the interface set of the second software package need to be used together to complete a specific function. For example, there is an interaction relationship between a communication interface of a sensor in the interface set of the first software package and a communication interface of a sensor in the interface set of the second software package, and the two interfaces may be used together to implement a function of transmitting sensor data.

In a possible implementation, the version information includes a major version number. If a major version number of the interface set of the first software package is the same as a major version number of the interface set of the second software package, the interface set of the first software package matches the interface set of the second software package. If the major version number of the interface set of the first software package is different from the major version number of the interface set of the second software package, the interface set of the first software package does not match the interface set of the second software package.

In this implementation, whether interface sets of software packages match each other is determined based on whether major version numbers of the interface sets of the software packages are the same. This can improve efficiency of determining a matching relationship between the interface sets of the software packages.

It may be understood that the version information includes the major version number. That is, the version information of the interface set of the first software package includes the major version number. The version information of the interface set of the second software package also includes the major version number.

A software interface may be changed based on an application scenario of a software function. The change includes, for example, modification or deletion of the interface. In a possible implementation, the interface set of the first software package includes a plurality of interfaces. The major version number of the interface set of the first software package is updated when one or more of the plurality of interfaces are modified or deleted.

In this implementation, a major version number of a software package is updated when an interface is modified or deleted. Based on this design, version information settings of all software packages may be unified and standardized, which can help confirm matching information based on the major version number, and further improves efficiency of confirming a matching relationship.

When a software function or function point is added, a software interface is added. In a possible implementation, the version information of the interface set of the first software package further includes a minor version number, and the minor version number is updated when a new interface is added to the interface set of the first software package.

In this implementation, a minor version number of a software package is updated when a new interface is added. Based on this design, scenarios where version information changes can be better distinguished by considering the minor version number.

In a possible implementation, the version information of the interface set of the second software package also includes a minor version number, and the minor version number is updated when a new interface is added to the interface set of the second software package.

Optionally, if the major version number of the interface set of the first software package is the same as the major version number of the interface set of the second software package, the interface set of the first software package matches the interface set of the second software package. In this case, the minor version number of the interface set of the first software package may be the same as or different from the minor version number of the interface set of the second software package.

If the major version number of the interface set of the first software package is different from the major version number of the interface set of the second software package, the interface set of the first software package does not match the interface set of the second software package. In this case, the minor version number of the interface set of the first software package may be the same as or different from the minor version number of the interface set of the second software package.

In a possible implementation, the first software package may be, for example, a mobile data center MDC software package, and the second software package may be, for example, an MDC development studio (MDC Development Studio, MDS) software package.

In a possible implementation, the method for generating matching information may be applied before a software package is released. For example, before a software package is to be released, a matching relationship between the software package and an existing (released) software package is determined. In this way, after the software package is released, when a user uses the software package, the user learns, directly based on product matching information of the software package, a software package that can be used together with the software package. This improves convenience for the user.

According to a second aspect, this application provides a method for determining a software package matching relationship. It may be understood that the method for determining a software package matching relationship may be performed by a data processing apparatus. The data processing apparatus may be an electronic device, or may be a processor, a chip (system), or a circuit used in an electronic device. This is not limited in this application. The method for determining a software package matching relationship includes:
obtaining a first software package and a second software package, where there is an interaction relationship between a first interface set of the first software package and a second interface set of the second software package; determining a matching relationship between the first interface set of the first software package and the second interface set of the second product based on version information of the first interface set of the first software package and version information of the second interface set of the second software package; and when the first interface set of the first software package does not match the second interface set of the second product, outputting prompt information, where the prompt information includes information related to the mismatch.

In this application, the first software package and the second software package are obtained, and the matching relationship between the first interface set of the first software package and the second interface set of the second product is determined based on the version information of the first interface set of the first software package and the version information of the second interface set of the second software package. Further, when the first interface set of the first software package does not match the second interface set of the second product, the prompt information is output. In this manner, when pieces of software do not match each other, a compatibility prompt may be provided for a user based on internal function features of the pieces of software. This allows the user to know which piece of software or which pieces of software are not matched, which reduces locating time.

An interface of a software package is a connection or interaction interface between software programs, which allows different programs to exchange information with each other without processing internal details of the programs. The interface of the software package may also be a bridge connecting a developer and a user. The user may use a software service through the interface, and the interface may also be used to connect different software. An interface set of a software package may include one or more interfaces.

That there is the interaction relationship between the first interface set of the first software package and the second interface set of the second software package may be understood that the first interface set of the first software package and the second interface set of the second software package need to be used together to complete a specific function. For example, there is an interaction relationship between a communication interface of a sensor in the first interface set of the first software package and a communication interface of a sensor in the second interface set of the second software package, and the two interfaces may be used together to implement a function of transmitting sensor data.

In a possible implementation, the prompt information may be that the first interface set of the first software package does not match the second interface set of the second product.

In a second possible implementation, the prompt information may be upgrade information. For example, if the first interface set of the first software package does not match the second interface set of the second product, and a major version number of the first interface set of the first software package is earlier than a major version number of the second interface set of the second product, the prompt information may be upgrading the first interface set of the first software package.

In still another possible implementation, the prompt information may include that the first interface set of the first software package does not match the second interface set of the second product, and further include upgrading the first interface set of the first software package.

Based on the prompt information, the user knows which piece of software or which pieces of software are not matched, which reduces locating time. The prompt information may be at least one of text information, voice information, and the like. This is not limited in this solution.

In a possible implementation, the version information includes a major version number. If a major version number of the first interface set of the first software package is the same as a major version number of the second interface set of the second software package, the first interface set of the first software package matches the second interface set of the second software package. If the major version number of the first interface set of the first software package is different from the major version number of the second interface set of the second software package, the first interface set of the first software package does not match the second interface set of the second software package.

In this implementation, whether interface sets of software packages match each other is determined based on whether major version numbers of the interface sets of the software packages are the same. This can improve efficiency of determining a matching relationship between the interface sets of the software packages.

It may be understood that the version information includes the major version number. That is, the version information of the first interface set of the first software package includes the major version number. The version information of the second interface set of the second software package also includes the major version number.

A software interface may be changed based on an application scenario of a software function. The change includes, for example, modification or deletion of the interface. In a possible implementation, the first interface set of the first software package includes a plurality of interfaces. The major version number of the first interface set of the first software package is updated when one or more of the plurality of interfaces are modified or deleted.

In this implementation, a major version number of a software package is updated when an interface is modified or deleted. Based on this design, version information settings of all software packages may be unified and standardized, which can help confirm matching information based on the major version number, and further improves efficiency of confirming a matching relationship.

When a software function or function point is added, a software interface is added. In a possible implementation, the version information of the first interface set of the first software package further includes a minor version number, and the minor version number is updated when a new interface is added to the first interface set of the first software package.

In this implementation, a minor version number of a software package is updated when a new interface is added. Based on this design, scenarios where version information changes can be better distinguished by considering the minor version number.

In a possible implementation, the version information of the second interface set of the second software package also includes a minor version number, and the minor version number is updated when a new interface is added to the second interface set of the second software package.

Optionally, if the major version number of the first interface set of the first software package is the same as the major version number of the second interface set of the second software package, the first interface set of the first software package matches the second interface set of the second software package. In this case, the minor version number of the first interface set of the first software package may be the same as or different from the minor version number of the second interface set of the second software package.

If the major version number of the first interface set of the first software package is different from the major version number of the second interface set of the second software package, the first interface set of the first software package does not match the second interface set of the second software package. In this case, the minor version number of the first interface set of the first software package may be the same as or different from the minor version number of the second interface set of the second software package.

In a possible implementation, the first software package may be, for example, a mobile data center MDC software package, and the second software package may be, for example, an MDC development studio (MDC Development Studio, MDS) software package.

In a possible implementation, the method for determining a software package matching relationship may be applied before a software package is run. For example, the method is applied before the first software package is run, and the second software package is loaded.

According to a third aspect, this application provides a data processing apparatus. It may be understood that the data processing apparatus may be an electronic device, or may be a processor, a chip (system), or a circuit used in an electronic device. This is not limited in this application. The data processing apparatus includes:
an obtaining module, configured to obtain version information of an interface set of a first software package, and obtain version information of an interface set of a second software package, where there is an interaction relationship between the interface set of the first software package and the interface set of the second software package; and
a processing module, configured to generate product matching information of the first software package based on the version information of the interface set of the first software package and the version information of the interface set of the second software package, where the product matching information indicates a matching relationship between the interface set of the first software package and the interface set of the second software package.

In this application, the data processing apparatus includes the obtaining module and the processing module. The obtaining module is configured to obtain the version information of the interface set of the first software package and the version information of the interface set of the second software package. The processing module is configured to generate the product matching information of the first software package based on the version information of the interface set of the first software package and the version information of the interface set of the second software package.

In a possible implementation, the version information includes a major version number. If a major version number of the interface set of the first software package is the same as a major version number of the interface set of the second software package, the interface set of the first software package matches the interface set of the second software package. If the major version number of the interface set of the first software package is different from the major version number of the interface set of the second software package, the interface set of the first software package does not match the interface set of the second software package.

In a possible implementation, the interface set of the first software package includes a plurality of interfaces. The major version number of the interface set of the first software package is updated when one or more of the plurality of interfaces are modified or deleted.

In a possible implementation, the version information of the interface set of the first software package further includes a minor version number, and the minor version number is updated when a new interface is added to the interface set of the first software package.

According to a fourth aspect, this application provides a data processing apparatus. It may be understood that the data processing apparatus may be an electronic device, or may be a processor, a chip (system), or a circuit used in an electronic device. This is not limited in this application. The data processing apparatus includes:
an obtaining module, configured to obtain a first software package and a second software package, where there is an interaction relationship between a first interface set of the first software package and a second interface set of the second software package; and
a processing module, configured to determine a matching relationship between the first interface set of the first software package and the second interface set of the second product based on version information of the first interface set of the first software package and version information of the second interface set of the second software package.

The processing module is further configured to: when the first interface set of the first software package does not match the second interface set of the second product, output prompt information, where the prompt information includes information related to the mismatch.

In this application, the data processing apparatus includes the obtaining module and the processing module. The obtaining module is configured to obtain the first software package and the second software package. The processing module is configured to determine the matching relationship between the first interface set of the first software package and the second interface set of the second product based on the version information of the first interface set of the first software package and the version information of the second interface set of the second software package. The processing module is further configured to: when the first interface set of the first software package does not match the second interface set of the second product, output the prompt information.

In a possible implementation, the version information includes a major version number. If a major version number of the first interface set of the first software package is the same as a major version number of the second interface set of the second software package, the first interface set of the first software package matches the second interface set of the second software package. If the major version number of the first interface set of the first software package is different from the major version number of the second interface set of the second software package, the first interface set of the first software package does not match the second interface set of the second software package.

In a possible implementation, the first interface set of the first software package includes a plurality of interfaces. The major version number of the first interface set of the first software package is updated when one or more of the plurality of interfaces are modified or deleted.

In a possible implementation, the version information of the first interface set of the first software package further includes a minor version number, and the minor version number is updated when a new interface is added to the first interface set of the first software package.

According to a fifth aspect, this application provides a computing device. The computing device includes a processor. The processor is coupled to a memory, and the processor is configured to invoke computer program instructions stored in the memory, to perform the method according to any possible implementation of the first aspect or the second aspect.

According to a sixth aspect, this application provides a chip. The chip is configured to implement the method according to any possible implementation of the first aspect or the second aspect.

According to a seventh aspect, this application provides a computer-readable storage medium. The computer-readable storage medium stores instructions. When the instructions are run on at least one processor, the method according to either of the first aspect and the second aspect or any possible implementation of the first aspect or the second aspect may be implemented.

According to an eighth aspect, this application provides a computer program product. The computer program product includes computer instructions. When the instructions are run on at least one processor, the method according to either of the first aspect and the second aspect or any possible implementation of the first aspect or the second aspect may be implemented. The computer program product may be a software installation package. If the foregoing method needs to be used, the computer program product may be downloaded and executed on a computing device.

For beneficial effects of the technical solutions provided in the third aspect to the eighth aspect of this application, refer to the beneficial effects of the technical solutions in the first aspect and the second aspect. Details are not described herein again.

### BRIEF DESCRIPTION OF DRAWINGS

The following describes accompanying drawings used in embodiments of this application.
FIG. 1a is a diagram of a data processing system according to an embodiment of this application;
FIG. 1b is a diagram of a scenario according to an embodiment of this application;
FIG. 2 is a schematic flowchart of a method for generating matching information according to an embodiment of this application;
FIG. 3 is a diagram of matching information according to an embodiment of this application;
FIG. 4 is a schematic flowchart of a method for determining a software package matching relationship according to an embodiment of this application;
FIG. 5 is a diagram of a structure of a data processing apparatus according to an embodiment of this application; and
FIG. 6 is a diagram of a structure of another data processing apparatus according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It can be explicitly and implicitly understood by a person skilled in the art that, in embodiments of this application, unless otherwise stated or there is a logic conflict, terms and/or descriptions in all embodiments are consistent and may be mutually referenced, and technical features in different embodiments may be combined into a new embodiment based on an internal logical relationship thereof.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

For ease of understanding, some concepts related to embodiments of this application are described below for reference by using examples. Details are as follows.

### 1. Interface set of a software package

An interface of a software package is a connection or interaction interface between software programs, which allows different programs to exchange information with each other without processing internal details of the programs. The interface of the software package may also be a bridge connecting a developer and a user. The user may use a software service through the interface, and the interface may also be used to connect different software.

The interface set of the software package may include one or more interfaces.

### 2. Product matching

If an interaction function between two products can be normally used, it indicates that the two products match each other.

The foregoing example descriptions of the concepts may be applied in the following embodiments.

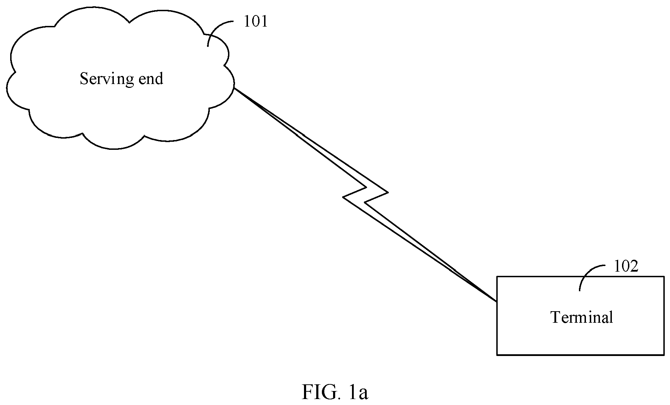

The following describes in detail a data processing system in embodiments of this application with reference to the accompanying drawings. FIG. 1a is a diagram of a data processing system to which an embodiment of this application is applicable. The system includes a serving end 101 and a terminal 102.

The serving end 101 is an apparatus having a centralized computing capability. For example, the serving end 101 may be implemented by using an apparatus such as a server, a virtual machine, a cloud, or a robot.

When the serving end 101 includes a server, a type of the server includes but is not limited to a general-purpose computer, a dedicated server computer, a blade server, and the like. A quantity of servers included in the serving end 101 is not strictly limited in this application, and there may be one or more servers (for example, a server cluster).

The virtual machine is a software-simulated computing module that has complete hardware system functions and that runs in a fully isolated environment. Certainly, in addition to the virtual machine, the serving end 101 may be implemented by using another computing instance, for example, a container.

The cloud is a software platform that uses an application virtualization technology, and can enable one or more pieces of software and applications to be developed and run in an independent virtualized environment. Optionally, when the serving end 101 is implemented by using the cloud, the cloud may be deployed on a public cloud, a private cloud, a hybrid cloud, or the like.

The terminal 102 may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearables, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

In a possible implementation, the serving end 101 obtains version information of an interface set of a to-be-released first software package, and obtains version information of an interface set of a second software package of the terminal 102, where there is an interaction relationship between the interface set of the first software package and the interface set of the second software package. The serving end 101 generates product matching information of the first software package based on the version information of the interface set of the first software package and the version information of the interface set of the second software package, where the product matching information indicates a matching relationship between the interface set of the first software package and the interface set of the second software package. In this way, the product matching information of the first software package can be automatically generated, which reduces labor costs and improves efficiency. Based on this design, when using the first software package, a user knows, based on the product matching information, a software package that matches the first software package, which improves convenience for the user.

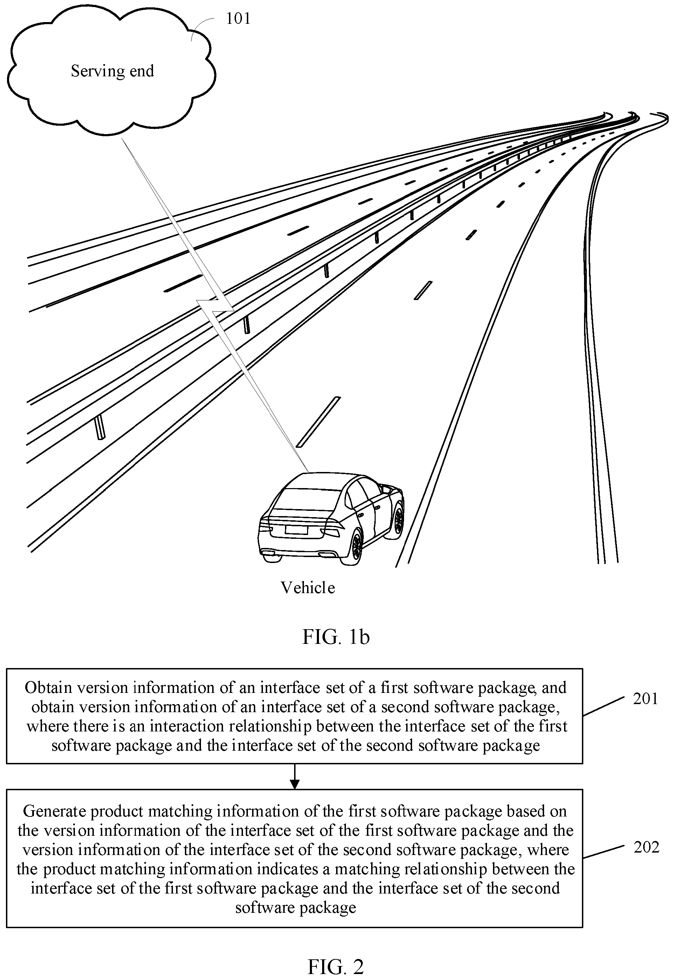

In a possible implementation, as shown in FIG. 1b, the terminal 102 may be a vehicle. In other words, the software package may be a software package used for installation in or use by the vehicle, for example, may be a mobile data center (Mobile Data Center, MDC) software package. The vehicle is an apparatus that has a communication capability and a computing capability, and can provide a mobile travel service for the user.

The foregoing describes the architecture for embodiments of this application. The following describes the method in embodiments of this application in detail.

FIG. 2 is a schematic flowchart of a method for generating matching information according to an embodiment of this application. The method for generating matching information shown in FIG. 2 may include steps 201 and 202. It should be understood that, for ease of description in this application, a sequence of 201 and 202 is used for description, but this is not intended to limit execution that is necessary in the foregoing sequence. An execution sequence, execution time, a quantity of execution times, and the like of the foregoing one or more steps are not limited in embodiments of this application. The following provides descriptions by using an example in which steps 201 and 202 in the method for generating matching information are performed by a server. This application is also applicable to other execution bodies. Steps 201 and 202 are specifically as follows.

201: Obtain version information of an interface set of a first software package, and obtain version information of an interface set of a second software package, where there is an interaction relationship between the interface set of the first software package and the interface set of the second software package.

For example, the first software package may be a platform software package, and the second software package may be a tool software package. This is not limited in this solution.

The interface set of the first software package may include one interface, or may include a plurality of interfaces. A plurality of interfaces in an interface set of a software package may be used to implement one or more functions. For example, the interface set of the first software package includes an interface A, an interface B, and an interface C. The interface A, the interface B, and the interface C are all configured to implement a same function. Alternatively, the interface A and the interface B are configured to implement a first function, the interface C is configured to implement a second function, and the first function is different from the second function.

For the interface set of the second software package, refer to the descriptions of the interface set of the first software package. Details are not described herein again.

That there is the interaction relationship between the interface set of the first software package and the interface set of the second software package may be understood that the interface set of the first software package and the interface set of the second software package need to be used together to complete a specific function. For example, there is an interaction relationship between a communication interface of a sensor in the interface set of the first software package and a communication interface of a sensor in the interface set of the second software package, and the two interfaces may be used together to implement a function of transmitting sensor data.

The version information of the interface set, for example, may be a version number. The version number may be characters such as one or more digits and/or letters. This is not limited in this solution.

The server may obtain the version information of the interface set of the first software package from the first software package, and obtain the version information of the interface set of the second software package from the second software package.

In a possible implementation, the version information of the interface set of the first software package is stored in a version information table of the interface set of the first software package, and the version information of the interface set of the second software package is stored in a version information table of the interface set of the second software package. For example, if the interface set of the first software package includes the interface A, the interface B, and the interface C, the version information table of the interface set of the first software package includes version information of the interface A, version information of the interface B, and version information of the interface C. For the version information table of the interface set of the second software package, refer to a record of the version information table of the interface set of the first software package. Details are not described herein again.

The version information table of the interface set of the first software package and the version information table of the interface set of the second software package are read, so that the version information of the interface set of the first software package and the version information of the interface set of the second software package can be obtained.

202: Generate product matching information of the first software package based on the version information of the interface set of the first software package and the version information of the interface set of the second software package, where the product matching information indicates a matching relationship between the interface set of the first software package and the interface set of the second software package.

In a possible implementation, the version information includes a major version number. For example, the version information of the interface set of the first software package includes a major version number, and the version information of the interface set of the second software package also includes a major version number. For example, the major version number may be 1, 2, or 3, or may be another character such as a digit and/or a letter. This is not limited in this solution.

In a possible implementation, the major version number of the interface set of the first software package may be compared with the major version number of the interface set of the second software package to determine whether the interface set of the first software package matches the interface set of the second software package.

If the major version number of the interface set of the first software package is the same as the major version number of the interface set of the second software package, the interface set of the first software package matches the interface set of the second software package.

If the major version number of the interface set of the first software package is different from the major version number of the interface set of the second software package, the interface set of the first software package does not match the interface set of the second software package.

In this example, whether interface sets of software packages match each other is determined based on whether major version numbers of the interface sets of the software packages are the same. This can improve efficiency of determining a matching relationship between the interface sets of the software packages.

A software interface may be changed based on an application scenario of a software function. The change includes, for example, modification or deletion of the interface. In a possible implementation, the interface set of the first software package includes a plurality of interfaces. The major version number of the interface set of the first software package is updated when one or more of the plurality of interfaces are modified or deleted.

For example, the interface set of the first software package includes an interface D. A major version number of the interface D is 1. The interface D is modified based on different application scenarios of a software function. When an interface E is newly released in the first software package, a major version number of the interface E is updated to, for example, 2. The interface D and the interface E are interfaces with a same function.

For another example, when the interface D of the first software package is deleted, the interface D does not exist. When the interface E is newly released in the first software package, a major version number of the interface E is updated to, for example, 2. The interface D and the interface E are interfaces with a same function. For another example, when an interface F is newly released in the second software package, a major version number of the interface F is also updated to, for example, 2. There is an interaction relationship between the interface F of the second software package and the interface E of the first software package.

When a software function or function point is added, a software interface is added. In a possible implementation, the version information of the interface set of the first software package further includes a minor version number, and the minor version number is updated when a new interface is added to the interface set of the first software package.

That is, the version information of the interface set of the first software package includes the major version number, and also includes the minor version number. For example, the interface set of the first software package includes an interface G. A major version number of the interface G is 1, and a minor version number of the interface G is 0. When an interface H is added to the interface set of the first software package, a major version number of the interface H is 1, and a minor version number of the interface H may be 1. Certainly, the minor version number of the interface H may also be 2, or the like. This is not limited in this solution.

The foregoing example is described by using an example in which the software interface of the first software package is changed or added. For the second software package, refer to the foregoing record. For example, the version information of the interface set of the second software package also includes the minor version number, and the minor version number is updated when a new interface is added to the interface set of the second software package. Details are not described herein again.

Optionally, if the major version number of the interface set of the first software package is the same as the major version number of the interface set of the second software package, the interface set of the first software package matches the interface set of the second software package. In this case, the minor version number of the interface set of the first software package may be the same as or different from the minor version number of the interface set of the second software package.

If the major version number of the interface set of the first software package is different from the major version number of the interface set of the second software package, the interface set of the first software package does not match the interface set of the second software package. In this case, the minor version number of the interface set of the first software package may be the same as or different from the minor version number of the interface set of the second software package.

In a possible implementation, the first software package may be, for example, a mobile data center MDC software package, and the second software package may be, for example, an MDS software package.

An example of version information of an interface set of the MDC software package may be as follows.

Version information of an interface MDC-MDC application visualizer (MDC Application Visualizer, MVIZ) is 2.0. That is, a major version number of the interface MDC-MVIZ is 2, and a minor version number of the interface MDC-MVIZ is 0.

Version information of an interface MDC-MDC measurement calibration diagnostic tools (MDC Measurement Calibration Diagnostic Tools, MCD) is 2.0. That is, a major version number of the interface MDC-MCD is 2, and a minor version number of the interface MDC-MCD is 0.

Version information of an interface MDC-MDS is 2.0. That is, a major version number of the interface MDC-MDS is 2, and a minor version number of the interface MDC-MDS is 0.

An example of version information of an interface set of the MDS software package may be as follows.

Version information of an interface software development kit (Software Development Kit, SDK)-MDS is 1.0. That is, a major version number of the interface SDK-MDS is 1, and a minor version number of the interface SDK-MDS is 0.

The version information of the interface MDC-MDS is 1.0. That is, the major version number of the interface MDC-MDS is 1, and the minor version number of the interface MDC-MDS is 0.

The product matching information of the first software package (the MDC software package) may be, for example, a product matching table listed in Table 1.

**Table 1**

| Software package name/type | Software version | Software package name/type | Matching version | Detailed matching description |
|---|---|---|---|---|
| MDC | 2.0.0 (From left to right: 2 indicates | MDS software | / | The version of |
| software package | a major version number of the software package, 0 indicates a minor version number, and 0 indicates a released version number.) | package | | the interface MDC-MDS is incompatible. |

A major version number of the interface set of the MDC software package is 2, and a major version number of the interface set of the MDS software package is 1. The major version number of the interface set of the MDC software package and that of the interface set of the MDS software package are different. Therefore, the interface set of the MDC software package does not match the interface set of the MDS software package.

For another example, the first software package may be, for example, an MDC SDK software package, and the second software package may be, for example, the MDS software package.

An example of version information of an interface set of the MDC SDK software package may be as follows.

The version information of the interface SDK-MDS is 1.0. That is, the major version number of the interface SDK-MDS is 1, and the minor version number of the interface SDK-MDS is 0.

The product matching information of the first software package (the MDC SDK software package) may be, for example, a product matching table listed in Table 2.

**Table 2**

| Software package name/type | Software version | Software package name/type | Matching version | Detailed matching description |
|---|---|---|---|---|
| MDC SDK software package | 1.0.0 | MDS software package | 1.0.0 | |

A major version number of the interface set of the MDC SDK software package is 1, and a major version number of the interface set of the MDS software package is 1. The major version number of the interface set of the MDC SDK software package and that of the interface set of the MDS software package are the same. Therefore, the interface set of the MDC software package matches the interface set of the MDS software package.

In this solution example, the first software package and the second software package are used as examples for description. It may be understood that the first software package may be one software package, or may be a plurality of software packages. The second software package may be one software package, or may be a plurality of software packages. It may be understood that the examples may be applied to determining a matching relationship between a plurality of software packages. This is not limited in this solution.

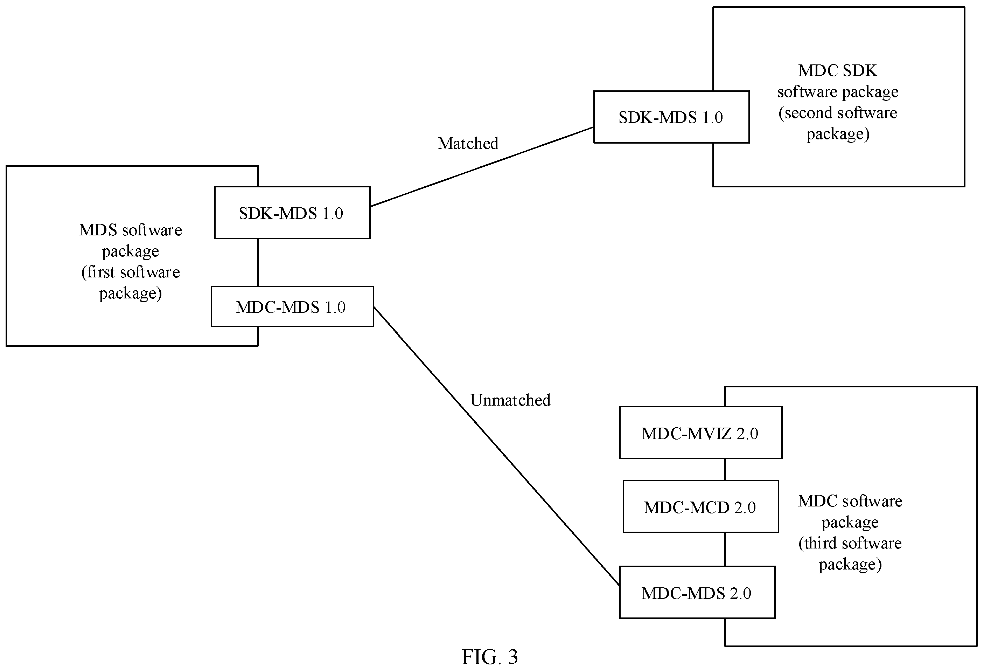

As shown in FIG. 3, for example, the first software package may be the MDS software package, the second software package may be the MDC SDK software package, and a third software package may be the MDC software package.

The product matching information of the first software package (the MDS software package) may be, for example, a product matching table listed in Table 3.

**Table 3**

| Software package name/type | Software version | Software package name/type | Matching version | Detailed matching description |
|---|---|---|---|---|
| MDS software package | 1.0.0 | MDC SDK software package | 1.0.0 | |
| MDS software package | 1.0.0 | MDC software package | 2.0.0 | The version of the interface MDC-MDS is incompatible. |

The foregoing product matching information is described only by using the product matching tables as examples. The product matching information may also be in another form, such as a text or a figure. This is not limited in this solution. The product matching information of the first software package may be stored in the software package.

In the examples, generating the product matching information only of the first software package is used as an example for description. For generating product matching information of the second software package, refer to the record in step 202. Details are not described herein again.

In a possible implementation, the method for generating matching information may be applied before a software package is released. For example, before a software package is to be released, a matching relationship between the software package and an existing (released) software package is determined. In this way, after the software package is released, when a user uses the software package, the user learns, directly based on product matching information of the software package, a software package that can be used together with the software package. This improves convenience for the user.

In this embodiment of this application, the version information of the interface set of the first software package and the version information of the interface set of the second software package are obtained, and the product matching information of the first software package is generated based on the version information of the interface set of the first software package and the version information of the interface set of the second software package. In this manner, the product matching information of the first software package can be automatically generated, which reduces labor costs and improves efficiency.

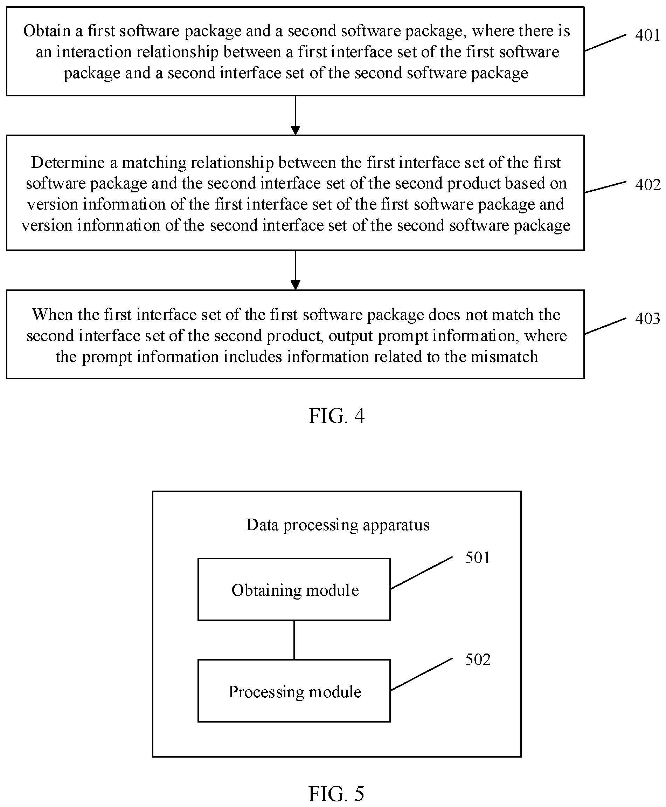

The foregoing examples are described by using the method for generating matching information as an example. An embodiment of this application further provides a method for determining a software package matching relationship. FIG. 4 is a schematic flowchart of the method for determining a software package matching relationship according to an embodiment of this application. Optionally, the method may be applied to the foregoing data processing system, for example, the data processing system shown in FIG. 1a or FIG. 1b. The method for determining a software package matching relationship shown in FIG. 4 may include steps 401 to 403. It should be understood that, for ease of description in this application, a sequence of 401 to 403 is used for description, but this is not intended to limit execution that is necessary in the foregoing sequence. An execution sequence, execution time, a quantity of execution times, and the like of the foregoing one or more steps are not limited in embodiments of this application. The following provides descriptions by using an example in which steps 401 to 403 in the method for determining a software package matching relationship are performed by a server. This application is also applicable to other execution bodies. Steps 401 to 403 are specifically as follows.

401: Obtain a first software package and a second software package, where there is an interaction relationship between a first interface set of the first software package and a second interface set of the second software package.

It may be understood that the first software package may include one or more interface sets. Each interface set may include one or more interfaces. Different interfaces in an interface set may be used to implement a same function, or may be used to implement different functions. The second software package may also include one or more interface sets. For details, refer to the descriptions of the first software package. Details are not described herein again.

The first interface set of the first software package may include one or more interfaces. The second interface set of the second software package may include one or more interfaces.

402: Determine a matching relationship between the first interface set of the first software package and the second interface set of the second product based on version information of the first interface set of the first software package and version information of the second interface set of the second software package.

The version information of the interface set, for example, may be a version number. The version number may be characters such as one or more digits and/or letters. This is not limited in this solution.

In a possible implementation, the version information includes a major version number. For example, the version information of the first interface set of the first software package includes a major version number, and the version information of the second interface set of the second software package also includes a major version number. For example, the major version number may be 1, 2, or 3, or may be another character such as a digit and/or a letter. This is not limited in this solution.

In a possible implementation, the major version number of the first interface set of the first software package may be compared with the major version number of the second interface set of the second software package to determine whether the first interface set of the first software package matches the second interface set of the second software package.

If the major version number of the first interface set of the first software package is the same as the major version number of the second interface set of the second software package, the first interface set of the first software package matches the second interface set of the second software package.

If the major version number of the first interface set of the first software package is different from the major version number of the second interface set of the second software package, the first interface set of the first software package does not match the second interface set of the second software package.

In this example, whether interface sets of software packages match each other is determined based on whether major version numbers of the interface sets of the software packages are the same. This can improve efficiency of determining a matching relationship between the interface sets of the software packages.

A software interface may be changed based on an application scenario of a software function. The change includes, for example, modification or deletion of the interface. In a possible implementation, the first interface set of the first software package includes a plurality of interfaces. The major version number of the first interface set of the first software package is updated when one or more of the plurality of interfaces are modified or deleted.

For example, the first interface set of the first software package includes an interface K1. A major version number of the interface K1 is 1. The interface K1 is modified based on different application scenarios of a software function. When an interface W1 is newly released in the first software package, a major version number of the interface W1 is updated to, for example, 2. The interface K1 and the interface W1 are interfaces with a same function.

For another example, when the interface K1 of the first software package is deleted, the interface K1 does not exist. When the interface W1 is newly released in the first software package, a major version number of the interface W1 is updated to, for example, 2. The interface K1 and the interface W1 are interfaces with a same function. For another example, when an interface K2 is newly released in the second software package, a major version number of the interface K2 is also updated to, for example, 2. There is an interaction relationship between the interface K2 of the second software package and the interface W1 of the first software package.

When a software function or function point is added, a software interface is added. In a possible implementation, the version information of the first interface set of the first software package further includes a minor version number, and the minor version number is updated when a new interface is added to the first interface set of the first software package.

That is, the version information of the first interface set of the first software package includes the major version number, and also includes the minor version number. For example, the first interface set of the first software package includes an interface M1. A major version number of the interface M1 is 1, and a minor version number of the interface M1 is 0. When an interface N1 is added to the first interface set of the first software package, a major version number of the interface N1 is 1, and a minor version number of the interface N1 may be 1. Certainly, the minor version number of the interface N1 may also be 2, or the like. This is not limited in this solution.

The foregoing example is described by using an example in which the software interface of the first software package is changed or added. For the second software package, refer to the foregoing record. For example, the version information of the interface set of the second software package also includes the minor version number, and the minor version number is updated when a new interface is added to the interface set of the second software package. Details are not described herein again.

Optionally, if the major version number of the first interface set of the first software package is the same as the major version number of the second interface set of the second software package, the first interface set of the first software package matches the second interface set of the second software package. In this case, the minor version number of the first interface set of the first software package may be the same as or different from the minor version number of the second interface set of the second software package.

If the major version number of the first interface set of the first software package is different from the major version number of the second interface set of the second software package, the first interface set of the first software package does not match the second interface set of the second software package. In this case, the minor version number of the first interface set of the first software package may be the same as or different from the minor version number of the second interface set of the second software package.

403: When the first interface set of the first software package does not match the second interface set of the second product, output prompt information, where the prompt information includes information related to the mismatch.

In a possible implementation, the prompt information may be that the first interface set of the first software package does not match the second interface set of the second product.

In a second possible implementation, the prompt information may be upgrade information. For example, if the first interface set of the first software package does not match the second interface set of the second product, and the major version number of the first interface set of the first software package is earlier than the major version number of the second interface set of the second product, the prompt information may be upgrading the first interface set of the first software package.

In still another possible implementation, the prompt information may include that the first interface set of the first software package does not match the second interface set of the second product, and further include upgrading the first interface set of the first software package.

The foregoing is only several examples of the prompt information. This is not limited in this solution.

For example, the server may output the foregoing prompt information to the terminal. The prompt information may be at least one of text information, voice information, and the like. This is not limited in this solution.

Based on the prompt information, the user knows which piece of software or which pieces of software are not matched, which reduces locating time.

In a possible implementation, when the first interface set of the first software package matches the second interface set of the second product, the first software package and the second software package are run.

In a possible implementation, the method for determining a software package matching relationship may be applied before a software package is run. For example, the method is applied before the first software package is run, and the second software package is loaded.

In this embodiment of this application, the first software package and the second software package are obtained, and the matching relationship between the first interface set of the first software package and the second interface set of the second product is determined based on the version information of the first interface set of the first software package and the version information of the second interface set of the second software package. Further, when the first interface set of the first software package does not match the second interface set of the second product, the prompt information is output. In this manner, when pieces of software do not match each other, a compatibility prompt may be provided for a user based on internal function features of the pieces of software. This allows the user to know which piece of software or which pieces of software are not matched, which reduces locating time.

It should be noted that, in embodiments of this application, unless otherwise stated or there is a logic conflict, terms and/or descriptions in all embodiments are consistent and may be mutually referenced, and technical features in different embodiments may be combined into a new embodiment based on an internal logical relationship thereof.

The foregoing describes in detail the methods in embodiments of this application. The following provides an apparatus in embodiments of this application. It may be understood that, in the apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may also be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus configured to implement any one of the foregoing methods. For example, a data processing apparatus is provided, including modules (or means) configured to implement steps performed by a server in any one of the foregoing methods.

For example, FIG. 5 is a diagram of a structure of the data processing apparatus according to an embodiment of this application. The data processing apparatus is configured to implement the foregoing method for generating matching information, for example, the method for generating matching information shown in FIG. 2.

As shown in FIG. 5, the apparatus may include an obtaining module 501 and a processing module 502. Details are described as follows.

The obtaining module 501 is configured to obtain version information of an interface set of a first software package, and obtain version information of an interface set of a second software package, where there is an interaction relationship between the interface set of the first software package and the interface set of the second software package.

The processing module 502 is configured to generate product matching information of the first software package based on the version information of the interface set of the first software package and the version information of the interface set of the second software package, where the product matching information indicates a matching relationship between the interface set of the first software package and the interface set of the second software package.

In this application, the data processing apparatus includes the obtaining module and the processing module. The obtaining module is configured to obtain the version information of the interface set of the first software package and the version information of the interface set of the second software package. The processing module is configured to generate the product matching information of the first software package based on the version information of the interface set of the first software package and the version information of the interface set of the second software package.

In a possible implementation, the version information includes a major version number. If a major version number of the interface set of the first software package is the same as a major version number of the interface set of the second software package, the interface set of the first software package matches the interface set of the second software package. If the major version number of the interface set of the first software package is different from the major version number of the interface set of the second software package, the interface set of the first software package does not match the interface set of the second software package.

In a possible implementation, the interface set of the first software package includes a plurality of interfaces. The major version number of the interface set of the first software package is updated when one or more of the plurality of interfaces are modified or deleted.

In a possible implementation, the version information of the interface set of the first software package further includes a minor version number, and the minor version number is updated when a new interface is added to the interface set of the first software package.

For descriptions of the foregoing modules, refer to the descriptions of the foregoing embodiments. Details are not described herein.

Alternatively, with reference to FIG. 5, the data processing apparatus may be configured to implement the foregoing method for determining a software package matching relationship, for example, the method for determining a software package matching relationship shown in FIG. 4.

As shown in FIG. 5, the apparatus may include an obtaining module 501 and a processing module 502. Details are described as follows.

The obtaining module 501 is configured to obtain a first software package and a second software package, where there is an interaction relationship between a first interface set of the first software package and a second interface set of the second software package.

The processing module 502 is configured to determine a matching relationship between the first interface set of the first software package and the second interface set of the second product based on version information of the first interface set of the first software package and version information of the second interface set of the second software package.

The processing module 502 is further configured to: when the first interface set of the first software package does not match the second interface set of the second product, output prompt information, where the prompt information includes information related to the mismatch.

In this application, the data processing apparatus includes the obtaining module and the processing module. The obtaining module is configured to obtain the first software package and the second software package. The processing module is configured to determine the matching relationship between the first interface set of the first software package and the second interface set of the second product based on the version information of the first interface set of the first software package and the version information of the second interface set of the second software package. The processing module is further configured to: when the first interface set of the first software package does not match the second interface set of the second product, output the prompt information.

In a possible implementation, the version information includes a major version number. If a major version number of the first interface set of the first software package is the same as a major version number of the second interface set of the second software package, the first interface set of the first software package matches the second interface set of the second software package. If the major version number of the first interface set of the first software package is different from the major version number of the second interface set of the second software package, the first interface set of the first software package does not match the second interface set of the second software package.

In a possible implementation, the first interface set of the first software package includes a plurality of interfaces. The major version number of the first interface set of the first software package is updated when one or more of the plurality of interfaces are modified or deleted.

In a possible implementation, the version information of the first interface set of the first software package further includes a minor version number, and the minor version number is updated when a new interface is added to the first interface set of the first software package.

For descriptions of the foregoing modules, refer to the descriptions of the foregoing embodiments. Details are not described herein.

It should be understood that division of the modules in the foregoing apparatuses is merely logical function division. During actual implementation, all or some of the modules may be integrated into one physical entity, or may be physically separated. In addition, the modules in the data processing apparatus may be implemented in a form of software invoked by a processor. For example, the data processing apparatus includes the processor, the processor is connected to a memory, the memory stores instructions, and the processor invokes the instructions stored in the memory, to implement any one of the foregoing methods or implement functions of the modules in the apparatus. The processor is, for example, a general-purpose processor, for example, a central processing unit (central processing unit, CPU) or a microprocessor, and the memory is a memory in the apparatus or a memory outside the apparatus. Alternatively, the modules in the apparatus may be implemented in a form of a hardware circuit, and functions of some or all of units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All modules of the foregoing apparatuses may be implemented in a form of software invoked by a processor, or all modules may be implemented in a form of a hardware circuit, or some modules may be implemented in a form of software invoked by a processor, and a remaining part may be implemented in a form of a hardware circuit.

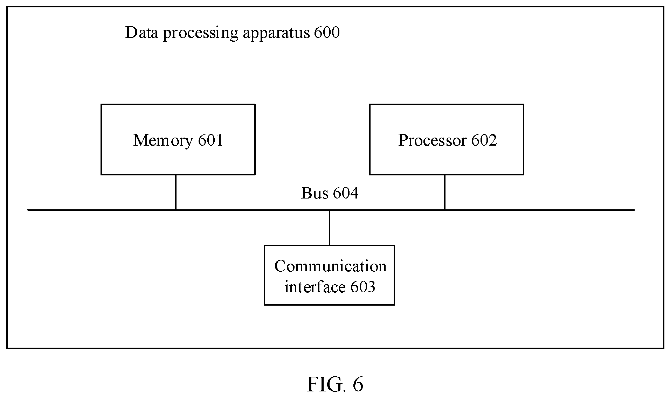

FIG. 6 is a diagram of a hardware structure of another data processing apparatus according to an embodiment of this application. A data processing apparatus 600 (the apparatus 600 may be specifically a computer device) shown in FIG. 6 includes a memory 601, a processor 602, a communication interface 603, and a bus 604. The memory 601, the processor 602, and the communication interface 603 implement mutual communication connections through the bus 604.

The memory 601 may be a read-only memory (read-only memory, ROM), a static storage device, a dynamic storage device, or a random access memory (random access memory, RAM).

The memory 601 may store a program. When the program stored in the memory 601 is executed by the processor 602, the processor 602 and the communication interface 603 are configured to perform the steps in the method for generating matching information or the steps in the method for determining a software package matching relationship in embodiments of this application.

The processor 602 is a circuit having a signal processing capability. In an implementation, the processor 602 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 602 may implement a specific function by using a logical relationship of a hardware circuit, and the logical relationship of the hardware circuit is fixed or reconfigurable. For example, the processor 602 is a hardware circuit implemented by an ASIC or a programmable logic device PLD, for example, an FPGA. In the reconfigurable hardware circuit, a process in which the processor loads a configuration document to implement hardware circuit configuration may be understood as a process in which the processor loads instructions to implement functions of some or all of the foregoing modules. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 602 is configured to execute a related program, to implement functions that need to be performed by a unit in the data processing apparatus in embodiments of this application, or perform the method for generating matching information or the method for determining a software package matching relationship in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the modules in the foregoing apparatus may be integrated, or may be independently implemented. In an implementation, the modules are integrated together and implemented in a form of a system-on-a-chip (system-on-a-chip, SOC). The SOC may include at least one processor, configured to implement any one of the methods or implement functions of the modules of the apparatus. Types of the at least one processor may be different, for example, the at least one processor includes a CPU and an FPGA, a CPU and an artificial intelligence processor, or a CPU and a GPU.

The communication interface 603 implements communication between the apparatus 600 and another device or a communication network by using a transceiver apparatus, for example, but not limited to, a transceiver. For example, data may be obtained through the communication interface 603.

The bus 604 may include a channel for transmitting information between the components (for example, the memory 601, the processor 602, and the communication interface 603) of the apparatus 600.

It should be noted that although only the memory, the processor, and the communication interface are shown in the apparatus 600 shown in FIG. 6, in a specific implementation process, a person skilled in the art should understand that the apparatus 600 further includes another device that is necessary for implementing normal running. In addition, based on a specific requirement, a person skilled in the art should understand that the apparatus 600 may further include a hardware device for implementing another additional function. In addition, a person skilled in the art should understand that the apparatus 600 may alternatively include only a device required for implementing embodiments of this application, and does not need to include all devices shown in FIG. 6.

An embodiment of this application further provides a computer-readable storage medium. The computer-readable storage medium stores instructions, and when the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

In the several embodiments provided in this application, it should be understood that the disclosed system, apparatus, and method may be implemented in other manners. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units. In other words, the units may be located in one position, or may be distributed on a plurality of network units. Some or all of the units may be selected based on actual requirements to achieve the objectives of the solutions of embodiments.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for generating matching information, comprising:
obtaining version information of an interface set of a first software package, and obtaining version information of an interface set of a second software package, wherein there is an interaction relationship between the interface set of the first software package and the interface set of the second software package; and
generating product matching information of the first software package based on the version information of the interface set of the first software package and the version information of the interface set of the second software package, wherein the product matching information indicates a matching relationship between the interface set of the first software package and the interface set of the second software package.

2. The method according to claim 1, wherein the version information comprises a major version number;
if a major version number of the interface set of the first software package is the same as a major version number of the interface set of the second software package, the interface set of the first software package matches the interface set of the second software package; and
if the major version number of the interface set of the first software package is different from the major version number of the interface set of the second software package, the interface set of the first software package does not match the interface set of the second software package.

3. The method according to claim 2, wherein the interface set of the first software package comprises a plurality of interfaces, and the major version number of the interface set of the first software package is updated when one or more of the plurality of interfaces are modified or deleted.

4. The method according to claim 3, wherein the version information of the interface set of the first software package further comprises a minor version number, and the minor version number is updated when a new interface is added to the interface set of the first software package.

5. A method for determining a software package matching relationship, comprising:
obtaining a first software package and a second software package, wherein there is an interaction relationship between a first interface set of the first software package and a second interface set of the second software package;
determining a matching relationship between the first interface set of the first software package and the second interface set of the second product based on version information of the first interface set of the first software package and version information of the second interface set of the second software package; and
when the first interface set of the first software package does not match the second interface set of the second product, outputting prompt information, wherein the prompt information comprises information related to the mismatch.

6. The method according to claim 5, wherein the version information comprises a major version number;
if a major version number of the first interface set of the first software package is the same as a major version number of the second interface set of the second software package, the first interface set of the first software package matches the second interface set of the second software package; and
if the major version number of the first interface set of the first software package is different from the major version number of the second interface set of the second software package, the first interface set of the first software package does not match the second interface set of the second software package.

7. The method according to claim 6, wherein the first interface set of the first software package comprises a plurality of interfaces, and the major version number of the first interface set of the first software package is updated when one or more of the plurality of interfaces are modified or deleted.

8. The method according to claim 7, wherein the version information of the first interface set of the first software package further comprises a minor version number, and the minor version number is updated when a new interface is added to the first interface set of the first software package.

9. A computing device, comprising:
a processor, wherein the processor is coupled to a memory, and the processor is configured to invoke computer program instructions stored in the memory, to perform the method according to any one of claims 1 to 4, or perform the method according to any one of claims 5 to 8.

10. A computer-readable storage medium, wherein the computer-readable storage medium stores instructions, and when the instructions are run on a computer, the computer is enabled to perform the method according to any one of claims 1 to 4 or the method according to any one of claims 5 to 8.
